# EUROPÄISCHE PATENTANMELDUNG

(11) **EP 4 782 593 A1**
(43) Veröffentlichungstag der Anmeldung: **29.07.2026**
(21) Anmeldenummer: 26152848.3
(22) Anmeldetag: 20.01.2026
(51) Int. Cl.: D21J 3/00

(54) **VERFAHREN ZUR REINIGUNG VON FORMWERKZEUGEN ZUM FORMEN VON FASERHALTIGEN MATERIALIEN UND FORMWERKZEUG**

(30) Priorität: 23.01.2025 DE 102025102503
(71) Anmelder: KIEFEL GmbH, 83395 Freilassing (DE)
(72) Erfinder: Hagenauer, Richard, 83416 Saaldorf-Surheim (DE); Rehrl, Josef, 83317 Teisendorf (DE); Rehrl, Hubert, 83317 Teisendorf (DE)
(74) Vertreter: DTS Patent- und Rechtsanwälte PartmbB

(57) **Zusammenfassung**

Es werden ein Verfahren zur Reinigung von Formwerkzeugen zum Formen von faserhaltigen Materialien und ein Formwerkzeug beschrieben.

## Beschreibung

### Technisches Gebiet

Es werden ein Verfahren zur Reinigung von Formwerkzeugen zum Formen von faserhaltigen Materialien und ein Formwerkzeug beschrieben.

Faserhaltige Materialen werden vermehrt eingesetzt, um bspw. Verpackungen für Lebensmittel (bspw. Schalen, Kapseln, Boxen, etc.) und Konsumgüter (bspw. elektronische Geräte etc.) sowie Getränkebehälter herzustellen. Es werden auch Alltagsgegenstände, wie bspw. Einwegbesteck und -geschirr, aus faserhaltigem Material hergestellt. Faserhaltige Materialien umfassen natürliche Fasern oder künstliche Fasern. In letzter Zeit wird vermehrt faserhaltiges Material eingesetzt, welches Naturfasern aufweist oder aus solchen besteht, die bspw. aus nachwachsenden Rohstoffen oder Altpapier gewonnen werden können. Die Naturfasern werden in einer sogenannten Pulpe mit Wasser und ggf. weiteren Zusätzen, wie z.B. Stärke, vermischt. Zusätze können zudem Auswirkungen auf die Farbe, die Barriereeigenschaften und mechanische Eigenschaften haben. Diese Pulpe kann einen Anteil von Naturfasern von bspw. 0,1 bis 10 Gew.-% aufweisen. Der Anteil an Naturfasern variiert in Abhängigkeit des Verfahrens, welches zur Herstellung von Verpackungen etc. angewandt wird, und der Produkteigenschaften des herzustellenden Produkts.

### Hintergrund

Die Herstellung von faserhaltigen Produkten aus einer Pulpe erfolgt in der Regel in mehreren Arbeitsschritten. Hierzu weist eine Faserverarbeitungseinrichtung mehrere Stationen auf. In einer Ansaugstation kann bspw. ein Ansaugen von Fasern in einer Ansaugkavität eines Ansaugwerkzeugs erfolgen, wodurch ein Vorformling geformt bzw. gebildet wird. Dazu wird die Pulpe in einem Pulpe-Vorrat bereitgestellt und das Ansaugwerkzeug mit mindestens einer Ansaugkavität, dessen Geometrie im Wesentlichen dem herzustellenden Produkt entspricht, zumindest teilweise in die Pulpe getaucht. Während des Eintauchens erfolgt ein Ansaugen über Öffnungen in der Ansaugkavität, die mit einer entsprechenden Saug-Einrichtung in Verbindung stehen, wobei sich Fasern aus der Pulpe an der Oberfläche der Ansaugkavität ansammeln. Die angesaugten Fasern bzw. ein Vorformling können anschließend über das Ansaugwerkzeug in ein Vorpresswerkzeug gebracht werden, wobei der Vorformling vorgepresst wird. Hierzu können bspw. elastische Formkörper zum Einsatz kommen, die zum Verpressen aufgeblasen werden und dabei einen Druck auf die Vorformlinge ausüben. Während dieses Vorpressvorgangs werden die Fasern im Vorformling verpresst und der Wassergehalt des Vorformlings reduziert. Alternativ kann die Bereitstellung von Vorformlingen mittels Schöpfen erfolgen, wobei ein Schöpfwerkzeug in die Pulpe getaucht wird und sich beim Hochfahren Fasern an Formteilen des Schöpfwerkzeugs ablagern.

Danach werden Vorformlinge in einer Heißpresseinrichtung zu fertigen Formteilen verpresst. Dabei handelt es sich um den finalen Schritt zum Formen von Formteilen. Hierbei werden Vorformlinge in ein Heißpresswerkzeug eingebracht, welches bspw. eine untere Werkzeughälfte und eine obere Werkzeughälfte aufweist, die beheizt werden. In dem Heißpresswerkzeug werden die Vorformlinge in einer Kavität unter Wärmeeintrag verpresst, wobei durch den Druck und die Wärme Restfeuchte ausgebracht wird, so dass der Feuchtigkeitsgehalt der Vorformlinge von ca. 60 Gew.-% vor dem Heißpressen auf bspw. 5-10 Gew.-% nach dem Heißpressen reduziert und eine Verbindung der Fasern durch Wasserstoffbrückenbindungen erreicht wird. Der beim Heißpressen entstehende Wasserdampf wird während des Heißpressens über Öffnungen in den Kavitäten und Kanäle im Heißpresswerkzeug abgesaugt.

Ein Herstellungsverfahren und eine Faserverarbeitungseinrichtung dazu sind bspw. aus DE 10 2019 127 562 A1 bekannt.

In den Heißpresswerkzeugen bzw. den Formwerkzeugen mit Formkörpern, welche eine Formfläche zum Verpressen des faserhaltigen Materials sowie Öffnungen in der Formfläche zum Absaugen von Wasserdampf und mit den Öffnungen verbundene Kanäle aufweisen, kommt es regelmäßig zum einen Verschmutzen der Kanäle und Öffnungen, da beim Abführen (bspw. Absaugen) von Wasserdampf während des Verpressens auch faserhaltiges Material mitangesaugt wird. Es kommt damit zu einer Ablagerung von kleinen faserhaltigen Materialen (z.B. MFC) und Bestandteilen des Pulpe-Wasser (z.B. Kalk, Additive, etc.). Je stärker die Kanäle und Öffnungen verschmutzen, desto schlechter kann Wasserdampf abgeführt werden, so dass die Qualität der herzustellenden Formteile mit zunehmender Verschmutzung stetig abnimmt. Sind Öffnungen oder Kanäle verstopft, kann bspw. Wasserdampf nicht mehr abgeführt werden, so dass Bereiche von Formteilen einen verhältnismäßig hohen Feuchtegehalt oder Risse und andere Fehlstellen aufweisen.

Die Verschmutzung von Formwerkzeugen und Formkörper bei der Verarbeitung von faserhaltigen Materialien zur Herstellung von Formteilen ist maßgeblich dafür, dass Formteile nicht die gewünschten Eigenschaften aufweisen. Aus diesem Grund wurden bereits verschiedene Versuche unternommen, eine Reinigung von Formwerkzeugen bzw. Formkörpern bereitzustellen.

In WO 2022/072555 A1 ist eine Reinigung beschrieben, wobei nach jedem Zyklus (Formschritt) Druckluft durch die Öffnungen eines Werkzeugs geblasen wird. Da die Reinigung mittels Druckluft nicht ausreicht, wird zusätzlich vorgeschlagen, das Werkzeug in regelmäßigen Abständen mit sauberem Wasser durchzuspülen. Dazu muss das Werkzeug abgekühlt und anschließend ausgebaut werden. Erst dann ist ein Durchspülen mit Wasser möglich. Eine solche Reinigung ist jedoch sehr zeitaufwendig. Zudem steigt auch die Ausfallzeit einer Anlage, da allein der Aus- und Einbau des Werkzeugs sowie das Durchspülen mit klarem Wasser einen sehr hohen Zeitaufwand bedeuten.

Weiterhin werden bisher Formwerkzeuge ausgebaut und die verstopften Öffnungen und Kanäle mechanisch gereinigt. Eine solche Reinigung ist zeitaufwendig und gestaltet sich auch sehr schwierig, weil die Öffnungen und Kanäle sehr geringe Durchmesser aufweisen.

Insgesamt sind damit die bekannten Maßnahmen zur Reinigung sehr aufwendig, kostspielig und können keine ausreichende Reinigung bereitstellen.

### Aufgabe

Demgegenüber besteht die Aufgabe darin, eine Lösung zur Reinigung von Formwerkzeugen für die Herstellung von Formteilen aus faserhaltigem Material anzugeben, welche

Verschmutzungen sicher aus Formwerkzeugen löst und ausbringt, wobei die Ausfallzeit von Formwerkzeugen auf ein Minimum reduziert wird.

### Lösung

Die vorstehend genannte Aufgabe wird durch ein Verfahren zur Reinigung von Formwerkzeugen zum Formen von faserhaltigen Materialien gelöst, wobei das Formwerkzeug an mindestens einem Bereich einer Formfläche Öffnungen aufweist, die mit Kanälen zum Abführen von während eines Formprozesses unter Druck und Wärmeeintrag austretendem Wasserdampf verbunden sind, wobei die Öffnungen und Kanäle zum Abführen von Wasserdampf in einer Abführrichtung aus dem Formwerkzeug vorgesehen sind, wobei zum Reinigen der Öffnungen und Kanäle ein Medium in flüssiger Form in mindestens einen Kanal des Formwerkzeugs entgegen der Abführrichtung eingebracht wird, wenn das Formwerkzeug eine Mindesttemperatur aufweist, wobei das eingebrachte flüssige Medium durch Kontakt mit dem Formwerkzeug in einen gasförmigen Zustand wechselt und entgegen der Abführrichtung aus den Kanälen und Öffnungen austritt.

Bei dem Verfahren erfolgt die Reinigung durch das eingebrachte Medium, bspw. Wasser, das durch den Kontakt mit einer Oberfläche mindestens eines Kanals verdampft, wobei der entstehende Dampf entgegen der Abführrichtung aus den Kanälen und Öffnungen austritt. Wasser im gasförmigen Aggregatzustand wird gewöhnlich als Wasserdampf bezeichnet. Dabei werden bspw. durch den Wasserdampf Verunreinigung und Ablagerungen mitgerissen und aus dem Formwerkzeug ausgebracht. Vorteilhafterweise muss das Formwerkzeug nicht abkühlen, um mit einem flüssigen Medium gereinigt zu werden. Vielmehr wird die vorhandene Wärme des Formwerkzeugs genutzt, um das Reinigungsmedium zu verdampfen. Zusätzlich können das Wasser bzw. der Dampf auch Verunreinigungen auflösen. Die gelösten Verunreinigungen können dann aus dem Formwerkzeug ausgebracht werden.

Anstelle von Wasser können auch andere Medien verwendet werden, wobei nachfolgend für Wasser als Reinigungsmedium das Verfahren und die Vorteile beschrieben werden. Durch das vorzugsweise schlagartige Verdampfen kommt es zu einer starken Volumenänderung des Mediums. Die über das heiße Formwerkzeug zugeführte Energie erhöht die innere Energie des Mediums. Die Energieerhöhung und Volumenänderung wird hier dazu genutzt, um Verschmutzungen und Ablagerungen loszureißen und aus dem Formwerkzeug auszubringen.

Die Steuerung der Richtung des Wasserdampfs kann bspw. durch Ventile oder dergleichen erfolgen, wobei der Wasserdampf nach dem Einbringen des Wassers und Verdampfen nur über die Öffnungen der Formfläche des Formwerkzeugs entweichen kann. Zum Einbringen von Wasser bzw. eines Mediums kann das Formwerkzeug einen Anschluss aufweisen, der bspw. mit einer Fördereinrichtung zum Einbringen des Mediums in den einen Kanal verbunden ist.

Da es zu einem schlagartigen Verdampfen kommt und der Wasserdampf zur Reinigung ebenfalls schnell austritt, kann die Reinigung schnell erfolgen und erlaubt eine vollständige Reinigung. So kann die Reinigung bspw. zeitlich geringer ausfallen als die Formzeit zum Formen von faserhaltigen Materialien im Formwerkzeug. Des Weiteren erfordert die Reinigung keinen Ausbau, keine Abkühlzeiten und keine Auf- oder Anbauten für das Formwerkzeug (bspw. Reinigungsvorrichtungen).

Die Menge an eingebrachtem Medium (bspw. Wasser) kann bspw. nach Maßgabe einer formbedingten Kühlung des Formwerkzeugs beim Verpressen von faserhaltigem Material bestimmt werden, um zu verhindern, dass das Formwerkzeug über ein gewöhnliches Maß durch das eingebrachte Medium abkühlt. Beim Formen und Verpressen von faserhaltigen Materialien kühlen die Formfläche und das Formwerkzeug aufgrund der in das faserhaltige Material eingebrachten Energie ab. Dies bemisst sich nach der Menge an faserhaltigem Material, dessen Feuchtegehalt und der Pressdauer. Entspricht die benötigte thermische Energie für die Reinigung im Wesentlichen der abgeführten thermischen Energie bei einem Formvorgang, kommt es bei der Reinigung nicht zu einem Abkühlen des Formwerkzeugs, welches sich von der gewöhnlichen Temperaturschwankung des Formwerkzeugs beim Formen unterscheidet. Somit kann nach der Reinigung die Herstellung von Formteilen direkt weitergehen.

Somit wird eine einfache, kostengünstige und effiziente Reinigung ermöglicht.

In weiteren Ausführungen kann die Mindesttemperatur in einem Temperaturbereich von 90 - 300 °Celsius, bevorzugt 150 - 250 °Celsius, insbesondere 180 - 230 °Celsius liegen.

In weiteren Ausführungen kann damit eine Prozesswärme des Formprozesses zum Formen von faserhaltigen Materialien für den Wechsel des Aggregatszustands des flüssigen Mediums genutzt werden.

In weiteren Ausführungen kann die Mindesttemperatur durch eine Heizeinrichtung für das Formwerkzeug zum Formen bereitgestellt werden, wobei die Heizeinrichtung für das Formen wesentlich ist und somit keine zusätzliche Einheit für die Reinigung darstellt.

In weiteren Ausführungen kann als flüssiges Medium Wasser eingebracht werden.

In weiteren Ausführungen kann das flüssige Medium unter einem Druck von 1 bis 200 bar, vorzugsweise 3 bis 20 bar, eingebracht werden.

In weiteren Ausführungen kann das flüssige Medium gepulst eingebracht werden. Dies ermöglicht es während eines Reinigungsschritts eine mehrfache Druckänderung auf Verschmutzungen in den Kanälen und Öffnungen des Formwerkzeugs auszuüben, weil der Dampfdruck des Wasserdampfs bei jedem Puls ansteigt bzw. variieren kann.

In weiteren Ausführungen kann die Flüssigkeit in einem Temperaturbereich von 5 - 50 °Celsius, vorzugsweise mit Umgebungstemperatur, zugeführt werden.

In weiteren Ausführungen kann die Flüssigkeit aus mindestens zwei unterschiedlichen Bestandteilen bestehen. Bspw. können Reinigungszusätze einem Wasser beigemischt werden. Damit kann ein Auflösen von Verunreinigungen zusätzlich unterstützt werden.

In weiteren Ausführungen kann das Formwerkzeug mindestens zwei zueinander bewegliche Formhälften und die Formhälften können jeweils mindestens eine Formfläche aufweisen, die im geschlossenen Zustand eine Kavität ausbilden, wobei das Einbringen der Flüssigkeit erfolgt, wenn die Formhälften geöffnet sind. Hierbei wird verhindert, dass durch den schlagartig entstehenden Wasserdampf das Formwerkzeug oder ein Formteil beschädigt werden.

In weiteren Ausführungen kann das Einbringen der Flüssigkeit nach einem Formen von faserhaltigem Material in der Kavität erfolgen. Dabei kann ein aus dem faserhaltigen Material geformtes Formteil an einer Formfläche aufliegen. Der aus dem Formwerkzeug austretende Wasserdampf zusammen mit Verunreinigungen kann an sich an dem Formteil ablagern. Ein solches Formteil kann je nach Verschmutzungsgrad und den am Formteil anhaftenden Verschmutzungen als Ausschuss verworfen oder - bei nur geringen Ablagerungen - weiterverarbeitet werden. Das Maß der Verschmutzungen kann anhand verschiedener Kriterien beurteilt werden. Bspw. kann dies anhand optischer Kriterien (Sichtbarkeit), der Oberflächenqualität, der Adhäsion der Verschmutzungen, der Wirkung (z.B. gesundheitliche Auswirkung bei Verzehr) etc. beurteilt werden.

In weiteren Ausführungen kann in einem Reinigungszyklus nach dem Formen eines faserhaltigen Materials zu einem Formteil zunächst das Formwerkzeug durch relative Verlagerung der zwei Formhälften geöffnet werden, und über die Öffnungen und Kanäle einer ersten Formhälfte das Formteil durch Ansaugen gehalten und über die Öffnungen und Kanäle einer zweiten Formhälfte eine Reinigung durch das gasförmiges Medium erfolgen und anschließend das Formwerkzeug wieder geschlossen werden, wobei das Formteil durch Ansaugen an die zweite Formteilhälfte übergeben und anschließend das Formwerkzeug geöffnet wird, wobei dann über das gasförmige Medium eine Reinigung der Kanäle und Öffnungen der ersten Formteilhälfte erfolgt. Es können damit beide Formhälften nacheinander gereinigt werden, wobei dazu eine Übergabe eines geformten Formteils erfolgt, so dass austretende Verschmutzungen sich an gegenüberliegenden Seiten des Formteils ablagern.

In weiteren Ausführungen kann eine Reinigung über die Öffnungen und Kanäle der zwei zueinander beweglichen Formhälften abwechselnd erfolgen. So kann bspw. mehrfach ein Medium abwechselnd in die Formhälften eingebracht werden.

In weiteren Ausführungen kann das Einbringen des flüssigen Mediums regelmäßig erfolgen, wobei bspw. nach einer definierbaren Anzahl an Formvorgängen automatisch eine Reinigung erfolgt. In weiteren Ausführungen kann zusätzlich oder alternativ eine Reinigung nach Maßgabe einer erfassten Verschmutzung erfolgen. Die Verschmutzung kann bspw. durch Druckveränderungen beim Absaugen von Wasserdampf beim Verpressen detektiert werden. In weiteren Ausführungen kann auch eine Temperatur des Formwerkzeugs erfasst werden, wobei es zu einer Temperaturänderung kommt, wenn Öffnungen und/oder Kanäle verstopfen, wobei es dann zu einer veränderten Dampfabfuhr und schließlich zu einer veränderten thermischen Beeinflussung des Formwerkzeugs kommt. In weiteren Ausführungen kann zusätzlich oder alternativ die Feuchtigkeit von geformten Formteilen erfasst werden. In noch weiteren Ausführungen kann zusätzlich oder alternativ eine visuelle Kontrolle erfolgen, bspw. über ein System mit einer Bilderfassungs- und Auswerteeinheit.

In weiteren Ausführungen kann das Formwerkzeug mindestens einen Werkzeugkörper und mindestens einen mit dem Werkzeugkörper verbundenen Formkörper aufweisen, wobei der mindestens eine Formkörper eine Formfläche mit Öffnungen und Kanäle zum Abführen von Wasserdampf aufweist, und wobei das flüssige Medium in mindestens einen Sammelkanal des Werkzeugkörpers eingebracht wird, der mit den Kanälen des mindestens einen Formkörpers verbunden ist. Das Medium, insbesondere der Wasserdampf, kann ausgehend von dem mindestens einen Sammelkanal im Werkzeugkörper in die Kanäle des mindestens einen Formkörpers strömen. In weiteren Ausführungen kann der Wasserdampf mehreren Formkörpern zugeführt werden. Bei einer geeigneten Ausführung von Sammelkanälen und der Einbringung von flüssigen Medien an mindestens einer Stelle kann sich Wasserdampf bspw. von der Mitte eines Werkzeugkörpers aus verteilen. Der Wasserdampf kann dann von mittleren Werkzeugkörpern nach außen hin austreten.

In weiteren Ausführungen kann der Werkzeugkörper beheizt werden, wobei die Beheizung für die benötige Temperatur zum Formen von faserhaltigem Material eingebracht wird. Die im Formwerkzeug vorhandene thermische Energie wird vorteilhaft für die Reinigung des Formwerkzeugs verwendet, ohne dass es zu einer Beeinträchtigung des Formverfahrens kommt.

Die vorstehend genannte Aufgabe wird auch durch ein Formwerkzeug zum Formen von Formteilen aus faserhaltigem Material gelöst, wobei das Formwerkzeug zwei Formhälften aufweist, die zueinander verlagerbar sind, wobei die Formhälften jeweils mindestens einen Formkörper mit einer Formfläche aufweisen und die Formfläche Öffnungen aufweisen, die mit Kanälen im Formkörper verbunden sind, und wobei das Formwerkzeug eine Einrichtung zum direkten oder indirekten Einbringen eines flüssigen Mediums in die Kanäle mindestens eines Formkörpers aufweist.

Das direkte Einbringen kann durch Einbringen in einen Formkörper und das indirekte Einbringen kann durch Einbringen eines flüssigen Mediums (bspw. Wasser) erfolgen. Die

Einrichtung kann bspw. als Lanze ausgeführt sein, die in einen (Sammel-)Kanal eines Werkzeugkörpers eingeführt ist oder in weiteren Ausführungen zum Einbringen des Mediums eingeführt wird. Das Medium kann dann an mindestens einer geeigneten Stelle eingebracht werden, wobei sich von dort aus das verdampfte Medium bspw. gleichmäßig ausbreiten und verteilen kann.

In weiteren Ausführungen kann die Einrichtung Ventile umfassen, welche das die Ausbreitung des Wasserdampfes steuern, so dass bspw. Wasserdampf ausgehend von mindestens einem Sammelkanal in einem Werkzeugkörper nur in Richtung von Formkörpern strömen kann. Damit wird verhindert, dass Wasserdampf bspw. über Öffnungen im Werkzeugkörper zum Druckausgleich und/oder Zu-/Abführen von Prozessluft während eines Formprozesses austritt. Es kommt damit zu keinem Druckabfall durch Entweichen von Wasserdampf an solchen Nebenöffnungen, die nicht Öffnungen an Formflächen sind.

Weitere Merkmale, Ausgestaltungen und Vorteile ergeben sich aus der nachfolgenden Darstellung von Ausführungsbeispielen mit Bezug auf die Figuren.

### Kurzbeschreibung der Figuren

In den Zeichnungen zeigt:
- Fig. 1: eine schematische Darstellung eines Formwerkzeugs zur Herstellung von Formteilen aus einem faserhaltigen Material;
- Fig. 2: eine schematische Darstellung einer Ausführungsform eines Formkörpers und eines Werkzeugkörpers eines Formwerkzeugs;
- Fig. 3: eine weitere schematische Darstellung der Ausführungsform eines Formkörpers und eines Werkzeugkörpers eines Formwerkzeugs; und
- Fig. 4: eine schematische Darstellung eines Verfahrens zum Formen von Formteilen und Reinigen eines Formwerkzeugs.

### Detaillierte Beschreibung von Ausführungsbeispielen

Nachfolgend werden mit Bezug auf die Figuren Ausführungsbeispiele der hierin beschriebenen technischen Lehre dargestellt. Für gleiche Komponenten, Teile und Abläufe werden in der Figurenbeschreibung gleiche Bezugszeichen verwendet. Für die hierin offenbarte technische Lehre unwesentliche oder für einen Fachmann sich erschließende Komponenten, Teile und Abläufe werden nicht explizit wiedergegeben. Im Singular angegebene Merkmale sind auch im Plural mitumfasst, sofern nicht explizit etwas anderes ausgeführt ist. Dies betrifft insbesondere Angaben wie "ein" oder "eine".

Die Herstellung von Formteilen 200 aus einem faserhaltigen Material in einem sogenannten Wet-Prozess erfolgt in mehreren Schritten. Hierzu wird eine Pulpe bereitgestellt. Die Pulpe ist eine wässrige Lösung mit Fasern. Der Anteil an Fasern kann bspw. 0,1- 5 Gew.-% betragen. Die Fasern können natürliche Fasern, bspw. Zellulosefasern, MFC, oder Fasern aus einem faserhaltigen Ursprungsmaterial (z.B. Altpapier) etc. sein oder umfassen. Zusätzlich können Additive und Zusätze, wie bspw. Stärke, chemische Zusätze, Wachs, etc. einer Pulpe zugeführt werden, um die Eigenschaften (z.B. Barriereeigenschaften) der herzustellenden Formteile bzw. Produkte und die Verarbeitbarkeit zu beeinflussen. Da als Ausgangsmaterial für Formteile 200 eine faserhaltige Pulpe mit natürlichen Fasern verwendet werden kann, können daraus hergestellte Formteile 200 nach ihrer Verwendung selbst wieder als Ausgangsmaterial für die Herstellung von Formteilen 200 oder anderen Erzeugnissen dienen oder kompostiert werden, weil diese in der Regel vollständig zersetzt werden können und keine bedenklichen, umweltgefährdenden Stoffe enthalten.

Nach der Bereitstellung der Pulpe werden die Fasern aus der Pulpe durch Schöpfen oder Ansaugen an einer Anformfläche einer Kavität angeformt. Bspw. können Fasern über ein Ansaugwerkzeug mit Ansaugkavitäten angesaugt werden, wobei die Anformfläche eine netzartige Oberfläche aufweisen, so dass sich Fasern daran anlagern können und mitangesaugtes Wasser abgeführt wird. Ansaugkavitäten können im Wesentlichen bereits die Gestalt von herzustellenden Formteilen aufweisen.

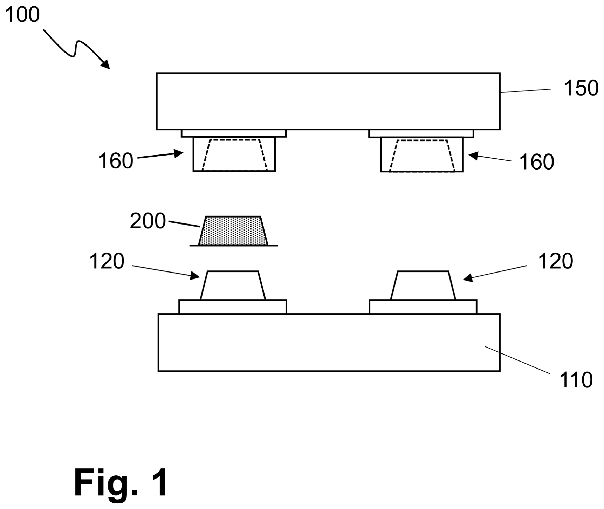

Die angesaugten Fasern können anschließend weiter bspw. in einer Vorpressstation mit aufblasbaren Membranen mechanisch vorgepresst werden. Anschließend erfolgt ein Verpressen der aus den Fasern vorgeformten Vorformlinge in einer sogenannten Heißpresse, die ein in Fig. 1 gezeigten Formwerkzeug 100 aufweisen kann.

Das in Fig. 1 gezeigte Formwerkzeug 100 dient zur Herstellung von Formteilen 200 aus einem faserhaltigen Material und weist eine erste Formhälfte mit einem ersten Werkzeugkörper 110 und eine zweite Formhälfte mit einem zweiten Werkzeugkörper 150 auf. An den zugewandten Flächen der Werkzeugkörper 110, 150 sind Formkörper 120, 160 angeordnet. In weiteren Ausführungen können mehrere Formkörper 120, 160 vorgesehen sein, wobei Fig. 1 zur Illustration nur zwei Formkörper 120, 160 zeigt. Fig. 1 zeigt das Formwerkzeug 100 im geöffneten Zustand, wobei die Werkzeugkörper 110, 150 mit den Formkörpern 120, 160 relativ voneinander wegbewegt sind. In diesem Zustand können Vorformlinge auf eine Formfläche 124 der Formkörper 120 aufgesetzt oder in die Formkörper 160 eingesetzt werden. Nach dem Einbringen der Vorformlinge wird das Formwerkezug 100 durch relative Verlagerung der Werkzeugkörper 110, 150 aufeinander zubewegt, wobei die Vorformlinge zwischen den Formflächen der Formkörper 120, 160 in einem Formraum verpresst werden. Die Formkörper 120, 160 sind zusätzlich beheizbar, so dass unter Druck und thermischer Einwirkung eine Verbindung der Fasern und ein finales Formen von Formteilen 200 erfolgt. Hierzu bestehen die Werkzeugkörper 110, 150 und die Formkörper 120, 160 aus einem geeigneten wärmeleitenden Material (bspw. Aluminium).

Die Beheizung der Formkörper 120, 160 kann direkt über Heizelemente in den Formkörpern 120, 160 oder indirekt über Heizelemente in den Werkzeugkörpern 110, 150 erfolgen.

Nach dem Formen der Formkörper 200 werden diese aus dem Formwerkzeug 100 entnommen und bspw. einer Nachbearbeitung zugeführt.

Beim Verpressen von feuchtem faserhaltigem Material (Feuchtegehalt > 50 Gew.-%) unter hohen Temperaturen (bspw. 160- 280 °C) entsteht Wasserdampf, der über Öffnungen 126 und Kanäle 127 in den Formkörpern 120 sowie mindesten einem Sammelkanal 112 im Werkzeugkörper 110 abgeführt wird. Der Wasserdampf kann bspw. über einen Unterdruck (Vakuum) oder eine Fördereinrichtung (z.B. Ventilator) abgeführt werden. In weiteren Ausführungen können auch der Werkzeugkörper 150 und die Formteile 160 Öffnungen 126 und Kanäle 127 sowie mindestens einen Sammelkanal 112 aufweisen.

Dabei kommt es auch zu einem Abführen von kleinsten Faserpartikeln, die sich an den Öffnungen 126 und Kanälen 127 absetzen. Zudem können im Wasserdampf gebundene Feststoffe (z.B. Kalk) sich ablagern. Es kommt daher beim Verpressen in Formwerkzeugen 100 zu einer zunehmenden Verschmutzung, insbesondere der Öffnungen 126 und Kanäle 127, wodurch der Querschnitt zum Abführen von Wasserdampf zunehmend abnimmt. Dies kann bis zu einer vollständigen Blockade führen. Je geringer die Menge an abgeführten Wasserdampf ist, desto stärker verschmutzen auch die Formflächen 124. Ferner kommt es nicht mehr zu einer ausreichenden Trocknung der Formteile 200. Weiterhin kann im Formraum ein hoher Druck durch nicht oder nicht ausreichend abgeführten Wasserdampf vorherrschen, der die Formteile mindestens lokal beschädigen kann.

Es kann zudem auch zu einer Verschmutzung und Verstopfung von Sammelkanälen 112 kommen.

Um eine Verschmutzung zu verhindern oder zu beseitigen, ist es erforderlich, das Formwerkzeug 100 und insbesondere die Kanäle 127 und Öffnungen 126 regelmäßig zu reinigen. Dabei sind Formköper 120 in der Regel als Block 122 ausgebildet. Die Öffnungen 126 und Kanäle 127 können bspw. durch Bohren in den Block 122 eingebracht werden. Die Öffnungen 126 und Kanäle 127 weisen zudem einen geringen Durchmesser auf, was die Reinigung erschwert, jedoch notwendig ist, um die Abfuhr von faserhaltigem Material über die Öffnungen 126 zu begrenzen. Zudem kommt es im Bereich von Öffnungen 126 an gepressten Formteilen 200 zu abstehenden Erhebungen, so dass die Öffnungen 126 entsprechend klein gehalten werden. Insbesondere im Hinblick auf die Ausbildung der Öffnungen 126 und Kanäle 127 sind die bekannten Maßnahmen zur Reinigung wie eingangs beschrieben nachteilig.

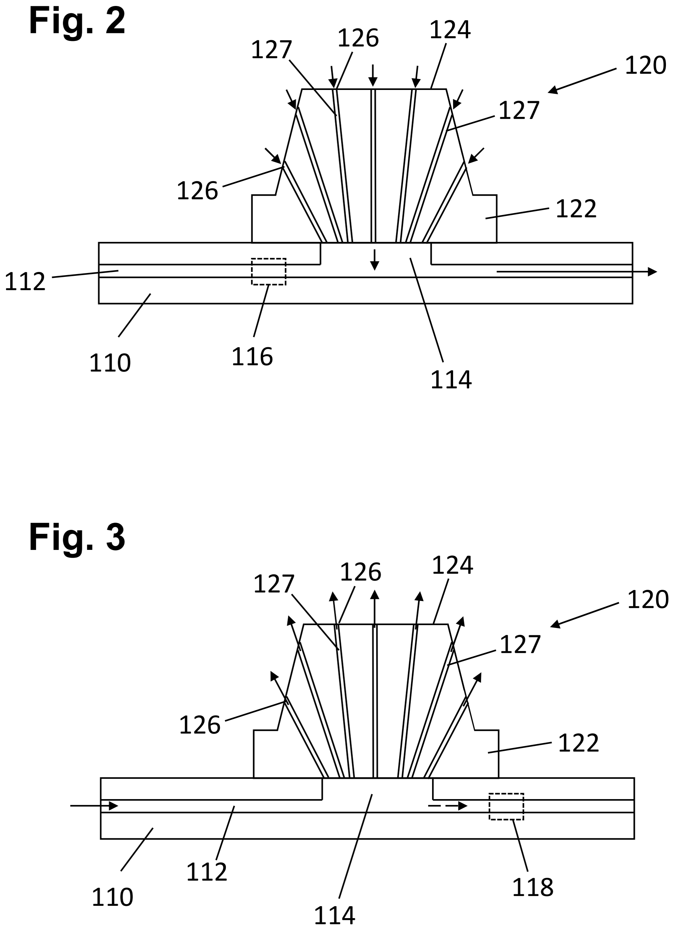

Fig. 2 zeigt eine schematische Darstellung einer Ausführungsform eines Formkörpers 120 und eines Werkzeugkörpers 110 eines Formwerkzeugs 100. In Fig. 2 ist schematisch ein Abführen von Wasserdampf während eines Formprozesses gezeigt. Dabei wird während des Formens austretender Wasserdampf über Öffnungen 126 an der Formfläche 124 und Kanäle 127 im Formkörper 120 abgeführt, bspw. durch Ansaugen. Der Formkörper 120 ist mit dem Werkzeugkörper 110 durch Schrauben (nicht gezeigt) oder dergleichen verbunden. Die Kanäle 127 des Formkörpers 120 münden in einen Eintrittsbereich 114 eines Sammelkanals 112. Der Sammelkanal 112 weist in dem gezeigten Ausführungsbeispiel zwei Zu- bzw. Abgänge auf, damit ein flüssiges Medium zur Reinigung eingebracht und beim Verpressen entstehender Wasserdampf abgeführt werden kann. In Fig. 2 ist ein Ventil 116 in einem Abschnitt der Sammelleitung 112 gezeigt. Dieser Abschnitt der Sammelleitung dient zum Einbringen von flüssigem Medium zur Reinigung. Beim Abführen von Wasserdampf während des Verpressens aus dem Formraum zwischen den Formflächen 124 eines Paares von Formkörpern 120 und 160 (nicht dargestellt) wird der Wasserdampf über eine Fördereinrichtung (z.B. Ventilator) oder eine Vakuumkammer abgeführt. Dabei kann das Ventil 116 in weiteren Ausführungen entfallen oder ein Ventil 116 teilweise geöffnet werden, damit ein Druckausgleich bzw. Nachströmen von bspw. Umgebungsluft beim Abführen von Wasserdampf möglich ist. Insbesondere beim Abführen von Wasserdampf beim Verpressen aus dem Formraum ist die Strömungsrichtung (Abführrichtung) des Wasserdampfs durch die Fördereinrichtung oder Vakuumkammer vorgegeben.

Eine Fördereinrichtung oder Vakuumkammer können zudem dazu dienen, Vorformlinge und Formteile 200 während des Formprozesses und bei der Übergabe durch Unterdruck zu Halten. Hierzu kann ein entsprechender Unterdruck über einen von gegenüberliegenden Formkörpern 120, 160 erzeugt werden.

Nach dem Formen von Formteilen 200 in dem Formwerkzeug 100 erfolgt in bestimmbaren (nach Verschmutzungsgrad) oder vorgegeben (bspw. nach 1000 Formvorgängen) Abständen eine Reinigung des Formwerkzeugs 100.

In Fig. 3 ist schematisch eine Reinigung durch Einbringen eines flüssigen Mediums zur Reinigung des Formkörpers 120 und dessen Kanäle 127 und Öffnungen 126 gezeigt. Dazu wird in den Sammelkanal 112 ein flüssiges Medium eingebracht. Als flüssiges Medium kann bspw. Wasser verwendet werden. Damit ist es nicht erforderlich teure und aggressive Medien zu verwenden, welche die Kanalstruktur und Oberflächen des Werkzeugkörpers 110 und der Formkörper 120 schädigen können. In weiteren Ausführungen können einem Wasser Reinigungszusätze beigemischt werden. Die Reinigung erfolgt unmittelbar nach einem Formprozess oder wenn das Formwerkzeug 100 bzw. Werkzeugkörper 110, 150 und/oder Formkörper 120, 160 eine Mindesttemperatur aufweisen. Die Mindesttemperatur entspricht vorzugsweise der Formtemperatur des Formwerkzeugs 100, die zum Formen von faserhaltigem Material benötigt wird. Die Mindesttemperatur kann bspw. 160-280 °C betragen. Daher kommt es beim Einbringen von Wasser als Reinigungsmedium schlagartig zu einem Verdampfen, sobald das Wasser mit heißen Komponenten des Formwerkzeugs 100, bspw. der Wand des Sammelkanals 112 in Berührung kommt. Dieser Dampf breitet sich schlagartig aus und wird strömt entgegen der Abführrichtung durch die Kanäle 127 und Öffnungen 126. Beim Verdampfen von Wasser kommt es zu einer starken Volumenänderung, wodurch ein hoher Druck durch das Medium entsteht, was beim Durchströmen der Kanäle 127 und Öffnungen 126 zu einem Lösen von Verschmutzungen führt. Das Wasser bzw. der Dampf können zusätzlich Verunreinigungen auflösen.

Um die Ausbreitung des Dampfs zur Reinigung zu steuern, kann bspw. mindestens ein Ventil 118 vorgesehen sein, welches ein Entweichen des Dampfs abseits der Öffnungen 126 verhindert. Das hat zur Folge, dass der Dampf nur über die Öffnungen 126 von Formkörpern 120 (bzw. Formkörpern 160) austreten kann. Über den mindestens einen Sammelkanal 112 kann Dampf zu weiteren Eintrittsbereichen 114 und Kanäle 127 von Formkörpern 120 strömen, so dass alle Formkörper 120 einer Formteilhälfte bzw. eines Formwerkzeugs 100 in einem Reinigungsvorgang gereinigt werden können. Das Wasser kann an nur einer Stelle in einem Sammelkanal 112 oder an mehreren Stellen in einem oder mehreren Sammelkanälen 112 eingebracht werden. In weiteren Ausführungen kann Wasser auch direkt in Kanäle 127 von Formkörpern 120 eingebracht werden. Die Menge an Wasser zur Reinigung kann variieren. Es kann bspw. die Menge an Wasser und die dem Formwerkzeug 100 entzogene Wärme, die zum Verdampfen des Wassers benötigt wird, im Wesentlichen der Menge entsprechen, die beim Verpressen von faserhaltigem Material ausgebracht wird. Dabei kann die dem Formwerkzeug 100 abgeführte thermische Energie beim Verpressen im Wesentlichen genauso groß sein, wie die beim Reinigen. Damit ist es möglich, die Reinigung unmittelbar nach einem Formvorgang zu starten und unmittelbar nach der Reinigung das Formen vorzusetzen.

Für die Reinigung kann das Formwerkzeug 100 geöffnet werden und ein zuvor geformtes Formteil 200 (oder ein Vorformling) an der Formfläche 124 des zu reinigenden Formkörpers 120, 160 verbleiben. Der austretende Dampf bei der Reinigung und die gelösten Verschmutzungen bleiben dann an einer Oberfläche des Formteils 200 oder Vorformlings haften und beschädigen oder verschmutzen nicht das Formwerkzeug 100. In weiteren Ausführungen kann das Formwerkzeug 100 nur leicht geöffnet werden, wobei ein Spalt (bspw. 5 - 50 mm) zwischen den Formteilhälften besteht. Dies ist dann vorteilhaft, wenn die Reinigung von "oberen" Formkörpern 160 durchgeführt wird, weil es nicht möglich ist, Formteile 200 durch ein Ansaugen über die Öffnungen 126 und Kanäle 127 gleichzeitig zu einer Reinigung durch Ausströmen von Dampf in entgegengesetzter Richtung über die Kanäle 127 und Öffnungen 126 zu halten. Daher können Formteile 200 auf gegenüberliegenden, "unteren" Formkörpern 120 verbleiben und der von oberen Formkörpern 160 austretende Dampf sowie die Verschmutzungen treffen auf die Formteile 200, die auf den unteren Formkörpern 120 aufliegen. Je geringer der Abstand dabei ist, desto geringer ist das Entweichen von Verschmutzungen.

Die während der Reinigung mit Verschmutzungen behafteten Formteile 200 können anschließend als Ausschuss ausgebracht werden.

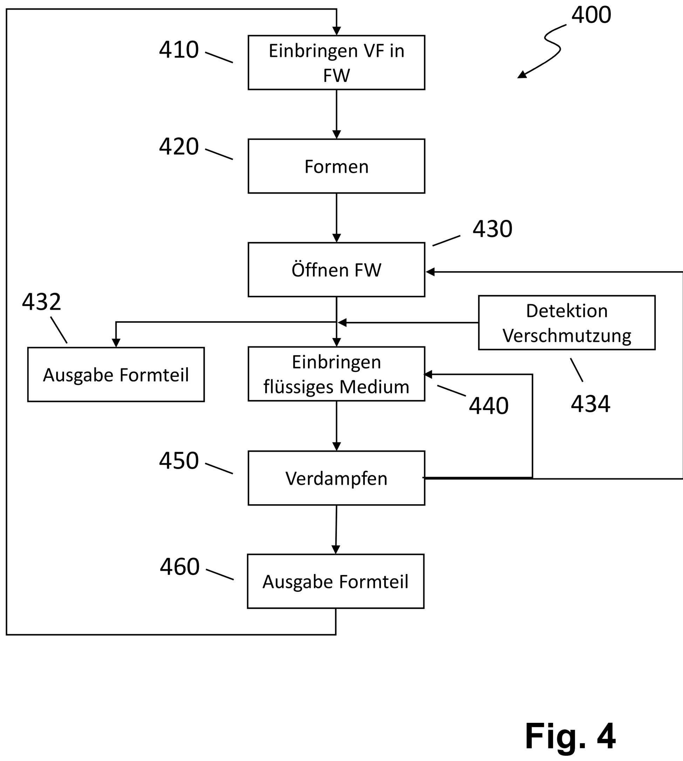

Fig. 4 zeigt eine schematische Darstellung eines Verfahrens 400 zum Formen von Formteilen 200 und Reinigen eines Formwerkzeugs 100 mit Bezug auf die vorstehenden Ausführungen.

Das Verfahren 400 setzt für das Formen von Formteilen 200 die Bereitstellung eines formbaren faserhaltigen Materials bzw. eines vorgeformten Vorformlings (VF) aus faserhaltigem Material voraus. Es erfolgt dann ein Einbringen 410 des faserhaltigen Materials bzw. von Vorformlingen (VF) in ein Formwerkzeug 100 (FW). Hierzu befindet sich das Formwerkzeug 100 in einem geöffneten Zustand, wie bspw. in Fig. 1 schematisch gezeigt. Das Formwerkzeug 100 bzw. die Werkzeughälften (Werkzeugkörper 110, 150 und Formkörper 120, 160) werden beheizt, um die Formflächen 124 der Formkörper 120, 160 auf die erforderliche Formtemperatur für den Formprozess zum Verbinden der Fasern zu bringen.

Anschließend wird das Formwerkzeug 100 geschlossen und die Vorformlinge (VF) in Formräumen zwischen den Formflächen 124 unter hohem Druck und thermischer Einwirkung verpresst, wobei ein Formen 420 von Formkörpern 200 erfolgt. Beim Formen 420 wird über Öffnungen 126 und Kanäle 127 entstehender Wasserdampf abgeführt.

Nach dem Formen 420 erfolgt ein Öffnen 430 des Formwerkzeugs 100. In einem normalen Formablauf werden die geformten Formteile 200 anschließend aus dem Formwerkzeug 100 übergeben (432) und einer weiteren Verarbeitung zugeführt.

Gemäß dem Verfahren von Fig. 4 erfolgt nach einer Detektion 434 oder nach Erreichen einer vorgebbaren Anzahl an Formvorgängen eine Reinigung, wobei hierzu ein Einbringen 440 eines flüssigen Mediums (z.B. Wasser) erfolgt, wie mit Bezug auf die Fig. 1 bis 3 beschrieben. Dabei verbleiben die geformten Formkörper 200 im Formwerkzeug 100. Bspw. verbleiben die Formkörper 200 auf einer unteren Formwerkzeughälfte.

Durch das Einbringen des flüssigen Mediums erfolgt aufgrund der vorherrschenden Temperatur im Formwerkzeug 100 ein Verdampfen 450 des flüssigen Mediums, das die Kanäle 127 und Öffnungen 126 von Formkörpern 120 durchströmt und dabei Verunreinigungen und Ablagerungen entfernt. Anschließend kann der Reinigungsprozess beendet werden, wenn nur die Formkörper 120 eines Werkzeugkörpers 110 gereinigt werden sollen.

In weiteren Ausführungen kann anschließend eine Reinigung einer oberen Formwerkzeughälfte erfolgen, wobei hierzu das Öffnen 430 für die Reinigung gegenüber der Verlagerung zur Entnahme von Formteilen 200 geringer ausfallen kann. Damit kann nach der Reinigung einer unteren Formwerkzeughälfte eine Reinigung einer oberen Formwerkzeughälfte erfolgen, wobei an den Formflächen der oberen Formwerkzeughälfte direkt keine Formteile 200 anliegen, welche zur Adsorption von Verschmutzungen dienen. Die geringe Verlagerung der Formwerkzeughälften bietet jedoch die Möglichkeit Verschmutzungen aufzunehmen.

In weiteren Ausführungen können die Reinigungsschritte für eine untere und eine obere Formwerkzeughälfte abwechselnd durchgeführt werden. In weiteren Ausführungen kann das Einbringen eines flüssigen Mediums gepulst und/oder unter Druck erfolgen.

Nach der Reinigung erfolgt die Ausgabe 460 von Formteilen 200 aus dem Reinigungsprozess, welche wie vorstehend beschrieben, entsorgt werden können, da sich an den Oberflächen der Formteile 200 Verschmutzungen (Faserstoffe, Kalk, etc.) ablagern. In weiteren Ausführungen kann bei geringen Ablagerungen eine Entsorgung entfallen.

Nach der Reinigung kann direkt im Anschluss der Formprozess zur Herstellung von Formteilen 200 weitergeführt werden, wobei keine Anlaufzeiten zum Aufheizen des Formwerkzeugs 100 oder Einbauzeiten für Reinigungskomponenten oder von Komponenten des Formwerkzeugs 100 selbst berücksichtigen werden müssen.

Die Erfassung der Verschmutzung kann nach Maßgabe von Erfahrungen über den Verschmutzungsgrad, einem Abfall der Abführleistung beim Abführen von Wasserdampf während des Verpressens, einem Temperaturabfall/-anstieg und einer sichtbaren und/oder spürbaren Verschlechterung der Qualität und Beschaffenheit von Formteilen 200 erfolgen. Hierzu können Mess- und Überwachungssysteme zum Einsatz kommen.

In weiteren Ausführungen kann das Einbringen des flüssigen Mediums mit Hilfe von Einrichtungen erfolgen, welche die Flüssigkeit direkt an ausgewählte Stellen im Formwerkzeug 100 einbringen. Hierzu können bspw. Einsprühlanzen zum Einsatz kommen. Dabei wird verhindert, dass das Medium zu früh bzw. an ungeeigneten Stellen eingebracht wird, so dass die Dampfausbreitung nicht optimal erfolgt. Vorzugsweise kann der Dampf aus den Öffnungen 126 von mehreren Formkörpern 120 in einer definierbaren Reihenfolge (bspw. mittig nach außen) erfolgen.

### Bezugszeichenliste

- 100: Formwerkzeug
- 110: Werkzeugkörper (erste Formhälfte)
- 112: Sammelkanal
- 114: Eintrittsbereich
- 116: Ventil
- 118: Ventil
- 120: Formkörper
- 122: Block
- 124: Formfläche
- 126: Öffnung
- 127: Kanal
- 150: Werkzeugkörper (zweite Formhälfte)
- 160: Formkörper
- 200: Formteil
- 400: Verfahren
- 410-460: Verfahrensschritte

## Patentansprüche

1. Verfahren zur Reinigung von Formwerkzeugen zum Formen von faserhaltigen Materialien, wobei das Formwerkzeug an mindestens einem Bereich einer Formfläche Öffnungen aufweist, die mit Kanälen zum Abführen von während eines Formprozesses unter Druck und Wärmeeintrag austretendem Wasserdampf verbunden sind, wobei die Öffnungen und Kanäle zum Abführen von Wasserdampf in einer Abführrichtung aus dem Formwerkzeug vorgesehen sind, wobei zum Reinigen der Öffnungen und Kanäle ein Medium in flüssiger Form in mindestens einen Kanal des Formwerkzeugs entgegen der Abführrichtung eingebracht wird, wenn das Formwerkzeug eine Mindesttemperatur aufweist, wobei das eingebrachte flüssige Medium durch Kontakt mit dem Formwerkzeug in einen gasförmigen Zustand wechselt und entgegen der Abführrichtung aus den Kanälen und Öffnungen austritt.

2. Verfahren nach Anspruch 1, wobei die Mindesttemperatur in einem Temperaturbereich von 90 - 300 °Celsius, bevorzugt 150 - 250 °Celsius, insbesondere 180 - 230 °Celsius liegt.

3. Verfahren nach Anspruch 1 oder 2, wobei eine Prozesswärme des Formprozesses zum Formen von faserhaltigen Materialien für den Wechsel des Aggregatszustands des flüssigen Mediums genutzt wird.

4. Verfahren nach einem der Ansprüche 1 bis 3, wobei die Mindesttemperatur durch eine Heizeinrichtung für das Formwerkzeug zum Formen bereitgestellt wird.

5. Verfahren nach einem der Ansprüche 1 bis 4, wobei als flüssiges Medium Wasser eingebracht wird.

6. Verfahren nach einem der Ansprüche 1 bis 5, wobei das flüssige Medium unter einem Druck von 1 bis 200 bar, vorzugsweise 3 bis 20 bar, eingebracht wird.

7. Verfahren nach einem der Ansprüche 1 bis 6, wobei das flüssige Medium gepulst eingebracht wird.

8. Verfahren nach einem der Ansprüche 1 bis 7, wobei die Flüssigkeit in einem Temperaturbereich von 5 - 50 °Celsius, vorzugsweise mit Umgebungstemperatur, zugeführt wird.

9. Verfahren nach einem der Ansprüche 1 bis 8, wobei die Flüssigkeit aus mindestens zwei unterschiedlichen Bestandteilen besteht.

10. Verfahren nach einem der Ansprüche 1 bis 9, wobei das Formwerkzeug mindestens zwei zueinander bewegliche Formhälften und die Formhälften jeweils mindestens eine Formfläche aufweisen, die im geschlossenen Zustand eine Kavität ausbilden, wobei das Einbringen der Flüssigkeit erfolgt, wenn die Formhälften geöffnet sind.

11. Verfahren nach Anspruch 10, wobei das Einbringen der Flüssigkeit nach einem Formen von faserhaltigem Material in der Kavität erfolgt.

12. Verfahren nach Anspruch 11, wobei in einem Reinigungszyklus nach dem Formen eines faserhaltigen Materials zu einem Formteil zunächst das Formwerkzeug durch relative Verlagerung der zwei Formhälften geöffnet wird, und über die Öffnungen und Kanäle einer ersten Formhälfte das Formteil durch Ansaugen gehalten und über die Öffnungen und Kanäle einer zweiten Formhälfte eine Reinigung durch das gasförmiges Medium erfolgt und anschließend das Formwerkzeug wieder geschlossen wird, wobei das Formteil durch Ansaugen an die zweite Formteilhälfte übergeben und anschließend das Formwerkzeug geöffnet wird, wobei dann über das gasförmige Medium eine Reinigung der Kanäle und Öffnungen der ersten Formteilhälfte erfolgt.

13. Verfahren nach einem der Ansprüche 10 bis 12, wobei eine Reinigung über die Öffnungen und Kanäle der zwei zueinander beweglichen Formhälften abwechselnd erfolgt.

14. Verfahren nach einem der Ansprüche 1 bis 13, wobei das Einbringen des flüssigen Mediums regelmäßig und/oder nach Maßgabe einer erfassten Verschmutzung des Formwerkzeugs erfolgt.

15. Verfahren nach einem der Ansprüche 1 bis 14, wobei das Formwerkzeug mindestens einen Werkzeugkörper und mindestens einen mit dem Werkzeugkörper verbundenen Formkörper aufweist, wobei der mindestens eine Formkörper eine Formfläche mit Öffnungen und Kanäle zum Abführen von Wasserdampf aufweist, und wobei das flüssige Medium in mindestens einen Sammelkanal des Werkzeugkörpers eingebracht wird, der mit den Kanälen des mindestens einen Formkörpers verbunden ist.

16. Verfahren nach Anspruch 15, wobei der Werkzeugkörper beheizt wird.

17. Formwerkzeug zum Formen von Formteilen aus faserhaltigem Material, wobei das Formwerkzeug zwei Formhälften aufweist, die zueinander verlagerbar sind, wobei die Formhälften jeweils mindestens einen Formkörper mit einer Formfläche aufweisen und die Formfläche Öffnungen aufweist, die mit Kanälen im Formkörper verbunden sind, und wobei das Formwerkzeug eine Einrichtung zum direkten oder indirekten Einbringen eines flüssigen Mediums in die Kanäle mindestens eines Formkörpers aufweist.
